# EUROPEAN PATENT SPECIFICATION

(11) **EP 1 952 023 B1**
(45) Date of publication and mention of the grant of the patent: **25.03.2009**
(21) Application number: 06804600.2
(22) Date of filing: 01.11.2006
(51) Int. Cl.: F04B 39/00

(54) **ACOUSTIC MUFFLER FOR A HERMETIC COMPRESSOR**
SCHALLDÄMPFER FÜR EINEN HERMETISCHEN VERDICHTER
SILENCIEUX ACOUSTIQUE POUR COMPRESSEUR HERMÉTIQUE

(30) Priority: 04.11.2005 BR PI0504921
(43) Date of publication of application: 06.08.2008
(73) Proprietor: WHIRLPOOL S.A., 04578-000 São Paulo SP (BR)
(72) Inventor: PROVESSI, Salvio, 89227-620 Joinville - SC (BR); RAMSDORF, Roberto, 89208-000 Joinville - SC (BR)
(74) Representative: Geyer, Fehners & Partner
(86) International application number: PCT/BR2006/000242
(87) International publication number: WO 2007/051272

(56) References cited:
- EP-A2- 1 316 943
- WO-A-98/22712
- WO-A-20/04085848
- JP-A- 2 030 990
- US-B1- 6 394 226

## Description

### Field of the Invention

The present invention refers to an acoustic muffler, such as a suction muffler used in the hermetic compressor of refrigeration machines, for example, refrigeration appliances, freezers, drinking fountains, refrigerated counters, etc.

### Background of the Invention

Hermetic compressors of refrigeration systems usually have their suction provided with an acoustic dampening system (acoustic filter or suction muffler) disposed in the interior of the shell and which conducts the gas from the suction line to the suction valve.

This component carries out several functions that are important to the appropriate operation of the compressor, such as: gas conduction, acoustic dampening and, in some cases, thermal insulation of the gas that is drawn to the interior of the cylinder. The acoustic muffler usually consists of two parts: a hollow base, internally provided with labyrinth-shaped chambers for the passage of gas, and a cover that hermetically closes the hollow base.

There are known methods for joining and sealing together the parts of hollow base and cover of the acoustic mufflers, such as by ultrasonic welding, metallic or plastic clamps together with sealing means defined by tight fittings, and through adhesives.

Solutions using welding are not usually satisfactory, as they permit the occurrence of excess of welding material in the joining region of the parts of hollow base and cover, which is mainly prejudicial when this excess occurs in the inside of the acoustic muffler, mainly in the case of a suction muffler, once said excess of welding interferes with the gas flowing therein and does not assure the necessary tightness for the acoustic muffler.

Solutions using metallic or plastic clamps, as well as those using adhesives or insertion of material between the parts of hollow base and cover, have as drawbacks a high production cost and the fact that they do not assure the necessary tightness for the acoustic muffler.

Apart from these solutions, there are also known prior art solutions for joining the parts of hollow base 1, 10 and cover 2, 20, such as those disclosed in documents US6394226 (figure 1) and the one illustrated in figure 2, in which a sealing belt 3, 30 is injected externally to the joining region of said parts, generally surrounding the external peripheral edge of a pair of peripheral flanges to be mutually seated, each of them projecting from the respective part of hollow base and cover, at the joining region thereof.

In the construction US6394226 (figure 1), the peripheral flange of the hollow base 1 carries a frusto-conical cavity 1a and the peripheral flange of the cover 2 carries a projection 2a, whose shape complements the shape of the cavity 1a, in order to provide the hermetic coupling of the hollow base 1 to the cover 2. A sealing belt 3 is injected externally to the joining region of the peripheral flanges of the hollow base 1 and cover 2, generally surrounding an external peripheral edge of said pair of peripheral flanges to be mutually seated.

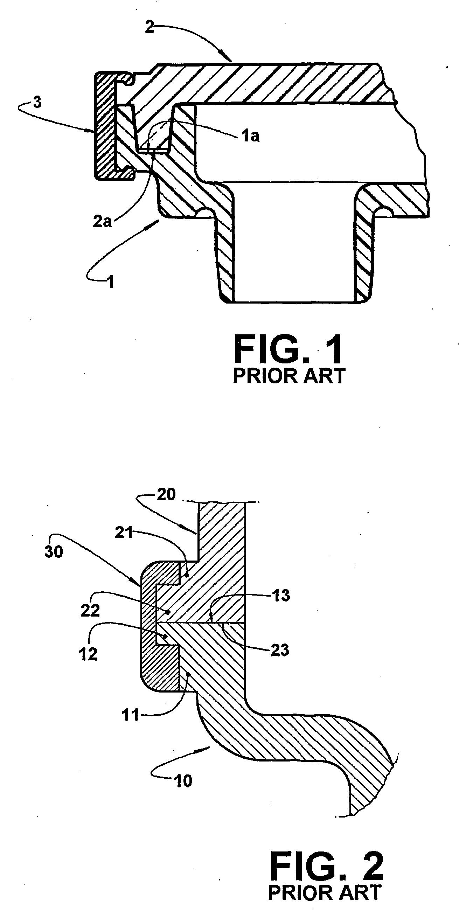

In another known prior art solution (figure 2), the peripheral flange 11, 21 of each part of hollow base 10 and cover 20 presents a respective planar seating surface 13, 23, said mutually seated peripheral flanges 11, 21 receiving a sealing belt 30 injected externally to the joining region of said parts, generally surrounding an external peripheral edge of the pair of peripheral flanges 11, 21.

Although such solutions provide a hermetic closure for the acoustic muffler, said closure is not sufficient to form a barrier against the occurrence of "flash", which generally happens during the over-injection of the sealing belt 3, 30.

A further prior art document is WO2004/085848, which discloses an acoustic muffler according to the preamble of claim 1.

### Objects of the Invention

Thus, it is an object of the present invention to provide an acoustic muffler for a hermetic compressor, which allows a hermetic mounting to be provided between its component parts of hollow base and cover, with a better locking therebetween, as well as the formation of a more efficient sealing barrier to avoid fluid communication between the interior and exterior of the acoustic muffler.

A more specific object of the present invention is to provide an acoustic muffler such as cited above, which defines a more efficient sealing barrier against the occurrence of "flash" in the cases in which said acoustic muffler receives, by over-injection, a sealing belt on the joining region of the peripheral flanges of both the hollow base and the cover.

Another object of the present invention is to provide an acoustic muffler such as cited above, which is easy to manufacture and to mount and has low cost.

It is a further object of the present invention to provide an acoustic muffler with the characteristics above and which presents high reliability and high resistance to impacts, thermal variations and fatigue.

### Summary of the Invention

These and other objects are accomplished through an acoustic muffler for a hermetic compressor, comprising: a hollow base; a cover to be coupled to the hollow base, said parts of hollow base and cover including respective peripheral flanges to be mutually seated according to a seating plane; and a retention means, attaching the hollow base to the cover at the junction of said peripheral flanges, each peripheral flange presenting a respective seating surface provided with at least one recess and one rib which are radially adjacent and shaped to respectively complement a rib and a recess of the seating surface of the other peripheral flange, each rib and recess being continuous and provided to define a locking between the parts of hollow base and cover against relative spacing apart movements in said seating plane, as well as to define continuous sealing radial labyrinths between the interior and the exterior of the acoustic muffler at the junction of said peripheral flanges, each part of rib and recess presenting a triangular profile.

### Brief Description of the Drawings

The invention will be described with reference to the enclosed drawings, in which:
Figure 1 schematically represents a partial longitudinal sectional view of the joining region of the hollow base and the cover of an acoustic muffler built according to the prior art;
Figure 2 schematically represents a partial longitudinal sectional view of the joining region of the hollow base and the cover of an acoustic muffler built according to another prior art solution;
Figure 3 schematically represents a longitudinal sectional view of the peripheral flanges of the parts of hollow base and cover of an acoustic muffler built according to the present invention, said peripheral flanges being spaced from each other;
Figure 4 schematically represents a longitudinal sectional view of the parts of hollow base and cover illustrated in figure 3, with the respective peripheral flanges being mutually seated and externally receiving a sealing belt; and
Figure 5 represents an enlarged view of the seating region of the mutually seated peripheral flanges illustrated in figure 4, indicating the direction in which the forces act to promote the mutual seating of the peripheral flanges.

### Description of the Illustrated Embodiments

The present invention will be described in relation to an acoustic muffler of the type used in a hermetic compressor of a refrigeration system, said acoustic muffler being of the type that comprises a hollow base 10, generally obtained in a material of low thermal conductivity and which is closed by a cover 20 seated onto its upper edge and attached thereto by a retention means 30, to be described ahead, at the junction of said peripheral flanges 11, 21.

In the illustrated solutions, the retention means 30 comprises a peripheral sealing belt, with a C-shaped profile and which is over-injected around the mutual seating region of the peripheral flanges 11, 21, pressing the latter.

Each part of hollow base 10 and cover 20 includes a respective peripheral flange 11, 21, radially projecting from the respective part and built so that said peripheral flanges 11, 21 are mutually seated according to a seating plane, upon the closure of the acoustic muffler.

In the constructions for a suction acoustic muffler, the hollow base 10 is provided with a gas inlet (not illustrated) in fluid communication with the gas supply to the compressor, and a gas outlet (not illustrated) in fluid communication with a suction side of the compressor. The hollow base 10 defines, therewithin, at least one acoustic chamber (not illustrated) in communication with the gas inlet and the gas outlet in relation to the interior of said hollow base 10.

In the illustrated constructions, each part of hollow base 10 and cover 20 has its respective peripheral flange 11, 21 projecting from a free edge portion 12, 22 of said part, each said peripheral flange 11, 21 defining a respective seating surface 13, 23, these being mutually confronting and contained in the seating plane, when said peripheral flanges 11, 21 are found mutually seated, closing the acoustic muffler. In order to assure an improved sealing to the gas in the interior of the acoustic muffler and, in the constructions presenting a retention means 30 over-injected around the joining region of the mutually seated peripheral flanges, to prevent the injected material from flowing from said retention means 30, the hollow base 10 and the cover 20 define, in the mutual seating condition of their peripheral flanges 11, 21, a labyrinth portion obtained, for example, with the provision of ribs 14, 24 and recesses 15, 25, to be mutually fitted by interference. In order to obtain better results regarding sealing and preventing material from flowing to the interior of the acoustic muffler, the ribs 14, 24 and recesses 15, 25 of each peripheral flange 11, 21 are provided in a circumferential region of the respective seating surface 13, 23 spaced from a radially innermost edge of the respective peripheral flange 11, 21.

In accordance with the present invention, each peripheral flange 11, 21 presents the respective seating surface 13, 23 provided with at least one rib 14, 24 and one recess 15, 25, radially adjacent and which are shaped to respectively complement one recess 15, 25 and one rib 14, 24 of the seating surface 13, 23 of the other peripheral flange 11, 21. Each rib 14, 24 and each recess 15, 25 presents a respective height corresponding to about 15% to 65% the width of the respective peripheral flange 11, 21, said parts of rib 14, 24 and recess 15, 25 being continuous and provided to define a locking between the parts of hollow base 10 and cover 20 against relative spacing apart movements in said seating plane, as well as to define continuous sealing radial labyrinths between the interior and the exterior of the acoustic muffler, at the junction of said peripheral flanges 11, 21. Values inferior to that of the lower limit of the presented value range cause a reduction of the contact area between each rib 14, 24 and the corresponding recess 15, 25, impairing the efficiency in terms of restricting leakages. More intense leakages are observed for values greater than that of the lower limit of the value range cited above, said leakage resulting from an increase in the imperfections regarding flatness and complementarity between the contact surfaces. In an illustrated specific constructive form, each rib 14, 24 and each recess 15, 25 present a height between about 18% and 25% of the width of the respective peripheral flange 11, 21. According to the illustrated construction, each peripheral flange 11, 21 presents a determined quantity of ribs 14, 24 and recesses 15, 25 with a triangular profile and defined complementary to each other, in an alternate sequential arrangement in the radial direction of the respective peripheral flange 11, 21. According to a way of carrying out the present invention, each rib 14, 24 is consecutively provided with a recess 15, 25 in the respective seating surface 13, 23, for example having each recess 15, 25, defined consecutively and immediately adjacent to a rib 14, 24 and the seating surface of the peripheral flange 21 of the cover 20 having a rib 24 provided in a radially outermost way. However, it should be understood that, although not illustrated, each peripheral flange 11, 21 can be provided with ribs 14, 24 and recesses 15, 25 in a radial arrangement different from the one illustrated, as long as the continuous profile of the respective seating surface creates upon the mutual seating of the peripheral flanges 11, 21 a radial barrier between the interior and the exterior of the acoustic muffler.

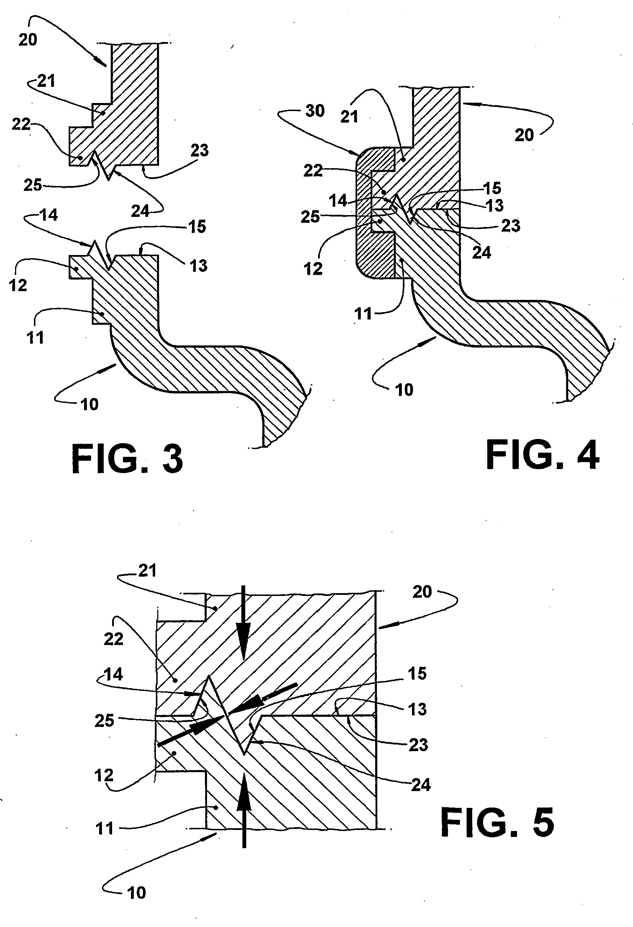

In the illustrated construction, each seating surface 13, 23 presents a rib followed by a recess, both presenting the same triangular profile defined so that the coplanar and adjacent side walls of a rib 14, 24 and of a consecutive recess 15, 25 in the same peripheral flange 11, 21 lie in the same plane inclined in relation to the seating plane. The angle of said inclined plane is defined for allowing, upon the mutual seating of the peripheral flanges 11, 21, an adhesion to occur between the seating surfaces, said adhesion being sufficient to, under the influence of the room temperature (when the material of the muffler, generally plastic, tends to accommodate and adjust itself), avoid the occurrence of relative movement between the parts of hollow base 10 and cover 20, breaking this adhesion and causing leakage. This adhesion effect (indicated by arrows in figure 4) is not obtained with the known prior art muffler constructions in which the mutual seating defines only an alignment between the parts to be mutually seated.

The acoustic muffler described herein presents advantages over the known prior art suction mufflers, as it provides a hermetic junction of the parts of hollow base and cover, resulting in a muffler of high reliability and high resistance to impacts, thermal variations and fatigue. The present solution further provides a low cost production with high capability. It should be understood that the described embodiments, as well as the one illustrated, are not intended to limit the concept defined in the claims that accompany the present disclosure, being solely exemplary constructions of said concept.

## Claims

1. Acoustic muffler for a hermetic compressor, comprising: a hollow base (10); a cover (20) to be coupled to the hollow base (10), said parts of hollow base (10) and cover (20) including respective peripheral flanges (11, 21) to be mutually seated according to a seating plane; and a retention means (30), attaching the hollow base (10) to the cover (20) at the junction of said peripheral flanges (11, 21), each peripheral flange (11, 21) presents a respective seating surface (12, 23) provided with at least one recess (15, 25) and one rib (14, 24) radially adjacent and which are shaped to respectively complement one rib (14, 24) and one recess (15, 25) of the seating surface (13, 23) of the other peripheral flange (11, 21), each rib (14, 24) and recess (15, 25) being continuous and provided to define a locking between the parts of hollow base (10) and cover (20) against relative spacing apart movements in said seating plane, and to define continuous sealing radial labyrinths between the interior and the exterior of the acoustic muffler, at the junction of said peripheral flanges (11, 21), **characterized in that** each part of rib (14, 24) and recess (15, 25) presents a triangular profile.

2. The suction muffler, as set forth in claim 1, **characterized in that** each rib (14, 24) is consecutively provided with a recess, (15, 25) in the respective seating surface (13, 23).

3. The suction muffler, as set forth in claim 2, **characterized in that** each recess (15, 25) is defined immediately adjacent to a rib (14, 24).

4. The suction muffler, as set forth in claim 1, **characterized in that** the seating surface (23) of the peripheral flange (21) of the cover (20) has a rib (24) provided in a radially outermost way.

5. The suction muffler, as set forth in claim 4, **characterized in that** the ribs (14, 24) and the recesses (15, 25) are provided in a circumferential region of the respective seating surface (13, 23), spaced from a radially innermost edge of the respective peripheral flange (11, 21).

6. The suction muffler, as set forth in claim 5, **characterized in that** the adjacent and coplanar side walls of a rib (14, 24) and a consecutive recess (15, 25) in the same peripheral flange (11, 21), are disposed in a plane inclined in relation to the seating plane.

7. The suction muffler, as set forth in claim 1, **characterized in that** each rib (14, 24) and each recess (15, 25) present a respective height corresponding to about 15% to 65% the width of the respective peripheral flange (11, 21).

8. The suction muffler, as set forth in claim 1, **characterized in that** the retention means (30) comprises a peripheral sealing belt with a C-shaped profile and which is over-injected around the junction region of the mutual seated peripheral flanges (11, 21), pressing the latter.

## Patentansprüche

1. Schalldämpfer für einen hermetischen Verdichter, mit einem mit einer Vertiefung versehenen Basisteil (10), einem Deckel (20) zur Befestigung an dem mit einer Vertiefung versehenen Basisteil (10), wobei diese Teile mit einer Vertiefung versehenes Basisteil (10) und Deckel (20) entsprechende Umlaufflansche (11, 21) zum Sitz aufeinander gemäß einer Sitzebene aufweisen, und mit Haltemitteln (30), welche das mit einer Vertiefung versehene Basisteil (10) an dem Deckel (20) an der Verbindung der Umlaufflansche (11, 21) befestigen, wobei jeder Umlaufflansch (11, 21) jeweils eine Sitzfläche (12, 23) aufweist, die mit mindestens einer Vertiefung (15, 25) und einer Leiste (14, 24) versehen ist, die radial benachbart und so ausgebildet sind, daß jeweils eine Leiste (14, 24) und eine Vertiefung (15, 25) der Sitzfläche (13, 23) des anderen Umlaufflansches (11, 21) sich ergänzen, wobei jede Leiste (14, 24) und jede Vertiefung (15, 25) durchgängig verlaufen und so vorgesehen sind, daß sie eine Verriegelung zwischen den Teilen mit einer Vertiefung versehenes Basisteil (10) und Deckel (20) gegen relative Trennbewegungen in dieser Sitzfläche, und durchgängige radiale Dichtlabyrinthe zwischen dem Inneren und dem Äußeren des Schalldämpfers an der Verbindung dieser Umlaufflansche (11, 21) festlegen, **dadurch gekennzeichnet, daß** jedes der Teile Leiste (14, 24) und Vertiefung (15, 25) ein dreieckförmiges Profil aufweist.

2. Schalldämpfer nach Anspruch 1, **dadurch gekennzeichnet, daß** auf jede Leiste (14, 24) nachfolgend eine Vertiefung (15, 25) in der jeweiligen Sitzfläche (13, 23) vorgesehen ist.

3. Schalldämpfer nach Anspruch 1, **dadurch gekennzeichnet, daß** jede Vertiefung (15, 25) unmittelbar benachbart einer Leiste (14, 24) festgelegt ist.

4. Schalldämpfer nach Anspruch 1, **dadurch gekennzeichnet, daß** die Sitzfläche (23) des Umlaufflansches (21) des Deckels (20) mit einer radial ganz außen liegenden Leiste (24) versehen ist.

5. Schalldämpfer nach Anspruch 4, **dadurch gekennzeichnet, daß** die Leisten (14, 24) und die Vertiefungen (15, 25) in einem Umfangsbereich der entsprechenden Sitzfläche (13, 23) vorgesehen sind, der in einem Abstand von einer radial ganz innen liegenden Kante des entsprechenden Umfangsflansches (11, 21) liegt.

6. Schalldämpfer nach Anspruch 5, **dadurch gekennzeichnet, daß** die benachbarten und koplanaren Seitenwände einer Leiste (14, 24) und eine folgende Vertiefung (15, 25) in demselben Umfangsflansch (11, 21) in einer Ebene liegen, die relativ zu der Sitzebene geneigt verläuft.

7. Schalldämpfer nach Anspruch 1, **dadurch gekennzeichnet, daß** jede Leiste (14, 24) und jede Vertiefung (15, 25) jeweils eine Höhe aufweisen, die etwa 15% bis 25% der Breite des entsprechenden Umfangsflansches (11, 21) entspricht.

8. Schalldämpfer nach Anspruch 1, **dadurch gekennzeichnet, daß** die Haltemittel (30) ein umlaufendes Dichtungsband mit einem C-förmigen Profil umfassen, und daß dieses um den Verbindungsbereich der gegenseitig aufeinander sitzenden Umfangsflansche (11, 21) herum überspritzt ist und die letzteren zusammendrückt.

## Revendications

1. Silencieux acoustique pour compresseur hermétique, comprenant : une base creuse (10) ; un couvercle (20) destiné à être couplé à la base creuse (10), lesdites parties de base creuse (10) et de couvercle (20) incluant des brides périphériques respectives (11, 21) destinées à être posées l'une sur l'autre selon un plan d'appui ; et un moyen de retenue (30), fixant la base creuse (10) au couvercle (20) à la jonction desdites brides périphériques (11, 21), chaque bride périphérique (11, 21) présentant une surface d'appui respective (13, 23) pourvue d'au moins un évidement (15, 25) et d'une nervure (14, 24) radialement adjacents et qui ont une forme destinée à compléter respectivement une nervure (14, 24) et un évidement (15, 25) de la surface d'appui (13, 23) de l'autre bride périphérique (11, 21), chaque nervure (14, 24) et chaque évidement (15, 25) étant continus et prévus pour définir un verrouillage entre les parties de base creuse (10) et de couvercle (20) contre des mouvements d'écartement relatifs dans ledit plan d'appui, et pour définir des labyrinthes d'étanchéité radiaux continus entre l'intérieur et l'extérieur du silencieux acoustique, à la jonction desdites brides périphériques (11, 21),
**caractérisé en ce que** chaque partie de nervure (14, 24) et d'évidement (15, 25) présente une section triangulaire.

2. Silencieux d'aspiration selon la revendication 1,
**caractérisé en ce que** chaque nervure (14, 24) est pourvue consécutivement d'un évidement (15, 25) dans la surface d'appui respective (13, 23).

3. Silencieux d'aspiration selon la revendication 2,
**caractérisé en ce que** chaque évidement (15, 25) est défini en étant immédiatement adjacent à une nervure (14, 24).

4. Silencieux d'aspiration selon la revendication 1,
**caractérisé en ce que** la surface d'appui (23) de la bride périphérique (21) du couvercle (20) a une nervure (24) prévue d'une façon la plus externe radialement.

5. Silencieux d'aspiration selon la revendication 4,
**caractérisé en ce que** les nervures (14, 24) et les évidements (15, 25) sont prévus dans une région circonférentielle de la surface d'appui respective (13, 23), espacée d'un bord le plus interne radialement de la bride périphérique respective (11,21).

6. Silencieux d'aspiration selon la revendication 5,
**caractérisé en ce que** les parois latérales adjacentes et coplanaires d'une nervure (14, 24) et d'un évidement consécutif (15, 25) dans la même bride périphérique (11, 21) sont disposées dans un plan incliné par rapport au plan d'appui.

7. Silencieux d'aspiration selon la revendication 1,
**caractérisé en ce que** chaque nervure (14, 24) et chaque évidement (15, 25) présentent une hauteur respective correspondant à environ 15 % à 65 % de la largeur de la bride périphérique respective (11, 21).

8. Silencieux d'aspiration selon la revendication 1,
**caractérisé en ce que** le moyen de retenue (30) comprend une bande d'étanchéité périphérique ayant une section en C et qui est surinjectée autour de la région de jonction des brides périphériques (11, 21) posées l'une sur l'autre, en exerçant une pression sur celles-ci.
